# FASCICULE DE BREVET EUROPEEN

(11) **EP 2 507 131 B1**
(45) Date de publication et mention de la délivrance du brevet: **22.02.2017**
(21) Numéro de dépôt: 10787401.8
(22) Date de dépôt: 01.12.2010
(51) Int. Cl.: B64D 11/06, B60N 2/00, B61D 33/00

(54) **SIÈGE CONVERTIBLE EN COUCHETTE**
SITZ, IN EIN BETT UMWANDELBAR
SEAT, CONVERTIBLE INTO A BED

(30) Priorité: 02.12.2009 FR 0958590
(43) Date de publication de la demande: 10.10.2012
(73) Titulaire: Stelia Aerospace, 17300 Rochefort (FR)
(72) Inventeur: VERGNAUD, Franck, F-17220 Saint Médard d'Aunis (FR); GUINOT, Didier, F-17000 La Rochelle (FR); MARTIN, Gabriel, F-17620 Echillais (FR)
(74) Mandataire: Ipside
(86) Numéro de dépôt international: PCT/EP2010/068635
(87) Numéro de publication internationale: WO 2011/067286

(56) Documents cités:
- US-A1- 2007 241 235
- US-A1- 2007 246 981

## Description

La présente invention appartient au domaine des aménagements des cabines de moyens de transport de passagers.

Plus particulièrement l'invention concerne un siège convertible en couchette particulièrement adapté aux besoins de cabines pour passagers, par exemple de cabines d'aéronefs.

Dans le domaine du transport de personnes il est connu de proposer aux passagers devant effectuer un voyage relativement long un siège pouvant être converti pendant la durée du voyage pour offrir au choix du passager une position assise ou une position de détente, position de détente qui peut correspondre à la position allongée.

Un fauteuil convertible en couchette s'avère une solution particulièrement avantageuse lorsque la durée du voyage rend celui-ci relativement pénible pour rester en position assise pendant tout le voyage et que cette durée reste cependant suffisamment réduite pour ne pas justifier de cabines individuelles.

Ce type de situation se trouve par exemple dans le cas des avions long courrier pour lesquels un voyage ne comporte qu'une période de sommeil et pour lesquels la place disponible est souvent très limitée.

C'est également le cas pour certains voyages utilisant le train, l'autocar, ou encore le bateau suivant la durée du voyage.

Il est connu de réaliser des fauteuils pour lesquels un mouvement conjugué de l'assise, du dossier et d'un repose jambes positionnant ces différentes parties du fauteuil sensiblement à l'horizontale dans un même plan permet de former un couchage, le cas échéant prolongé par une banquette fixe à la même hauteur que le plan de couchage.

De tels fauteuils, convertibles en couchage à plat, offre le confort recherché mais ils imposent, lorsqu'ils sont installés en nombre dans une cabine de passagers, une distance suivant le sens longitudinal entre les sièges, le pas des sièges dans la cabine, au moins égal à la longueur de la couchette obtenue, et le plus souvent une distance supérieure lorsqu'un occupant d'un siège mitoyen d'un autre siège doit accéder à un couloir qui n'est pas de son côté.

Ce type de confort, très exigeant en place est donc réservé à des cabines de luxe et implique de limiter le nombre de sièges pouvant être installés dans une longueur de cabine donnée.

Pour augmenter le nombre de sièges dans une cabine en diminuant la distance entre sièges, il est également connu de limiter les mouvements des parties du siège pour amener le siège dans une position moyenne horizontale ou très inclinée mais en maintenant des angles entre les différentes parties, assise et dossier d'une part et assise et repose jambe d'autre part, pour aboutir à un profil en Z couché.

Le gain sur la longueur du siège dans cette position dite « position relax » autorise un agencement de cabine avec un pas des sièges diminué par rapport à la solution d'un couchage à plat mais le confort est moindre et ne satisfait généralement pas les passagers des classes supérieures.

Une autre solution connue pour diminuer le pas entre les sièges dans le cas d'un couchage à plat ou d'une position relax consiste à disposer d'un espace sous le siège devant un autre siège dans lequel l'occupant du siège arrière positionne ses pieds.

Cette solution s'avère cependant pénalisante en confort car elle ne permet pas de relever suffisamment les pieds et dans le cas d'un couchage à plat impose que le couchage ne soit pas horizontal mais incliné sensiblement par rapport à l'horizontal.

Le document US2007/246981 décrit un bloc de deux sièges conforme au préambule de la revendication 1.

La compétition très forte dans le domaine du transport rend ainsi délicat le compromis entre une cabine offrant des sièges avec un couchage à plat intégral et horizontal, commercialement très attractive, et une cabine comportant plus de sièges n'offrant pas un tel couchage à plat, donc économiquement plus rentable mais commercialement moins attractive.

La présente invention concerne un aménagement de cabine pour le transport de passagers dans lequel les sièges sont convertibles en couchage à plat et dans lequel le pas des sièges est sensiblement inférieur à la longueur du couchage, par exemple équivalent à celui qui serait nécessaire pour des sièges comportant une position relax.

Un tel résultat est obtenu en mettant en oeuvre l'ensemble de l'invention selon la revendication indépendante qui comporte une pluralité de blocs de sièges alignés les uns derrière les autres.

Dans un bloc de sièges de l'invention comportant au moins deux sièges, chaque siège est convertible individuellement, par un mouvement relatif d'éléments du siège, entre une configuration fauteuil, dans laquelle un occupant du siège est dans une position assise, et une configuration couchage, dans laquelle les éléments du siège sont placés pour former un plan de couchage, dans laquelle un occupant du siège est étendu sensiblement à plat et sensiblement horizontalement.

Les deux sièges considérés d'un bloc sont agencés côte à côte et orientés sensiblement dans un même sens, et :
- chaque siège est associé à un espace ou zone pieds situé en avant du siège lorsque le siège est en configuration couchage et dans le prolongement du plan de couchage, espace correspondant à l'emplacement d'un occupant du siège en configuration couchage ;
- l'axe longitudinal de chacun des sièges en configuration couchage converge vers un point de convergence situé dans un plan vertical de symétrie du bloc en avant des sièges de sorte que les zones pieds des deux sièges du bloc sont superposées dans une projection verticale au moins en partie ;
- lorsque les deux sièges sont en configuration couchage, les plans de couchage des deux sièges sont à des hauteurs différentes par rapport au plancher d'une cabine dans laquelle le bloc serait installé.

Ainsi une partie du couchage s'étend vers l'avant du siège au-delà de la surface obtenue par le mouvement relatif des éléments du siège permettant de diminuer la longueur du siège dans la configuration couchage à une longueur **L1** inférieure à la longueur **L0** du couchage et l'interférence entre les zones pieds des deux sièges en position couchage d'un même bloc est évitée par le décalage en hauteur des deux plans de couchage.

Pour compenser la diminution de longueur des sièges en configuration couchage par rapport à la longueur du couchage, un espace de séparation est agencé dans une partie arrière du bloc sensiblement entre les dossiers des deux sièges, lorsque les deux sièges sont en configuration fauteuil.

L'espace de séparation est occupé par une colonne sensiblement verticale, cette colonne recouvrant en projection verticale des zones pieds des sièges d'un bloc similaire qui serait placé derrière le bloc considéré, dans le même sens et sensiblement suivant le même axe, à une distance de séparation entre les deux blocs, le pas **X** des blocs dans un aménagement, inférieure à une longueur désirée **L0** du couchage du bloc similaire en arrière. Ainsi l'espace correspondant à cette colonne permet de créer entre les deux sièges d'un bloc devant un bloc dont un siège est en configuration couchage un espace pour prolonger le couchage du bloc situé en arrière de la longueur voulue.

Considérant comme hauteur de référence au-dessus du plancher la hauteur de l'assise des sièges en configuration fauteuil, le décalage en hauteur des deux plans de couchage des sièges d'un bloc est obtenu par un des plans de couchage dans la configuration couchage au-dessus de l'assise en configuration fauteuil ou par un au moins des plans de couchage en dessous de l'assise du siège en configuration fauteuil pour au moins un des sièges du bloc.

De préférence pour répartir le décalage en hauteur entre les plans de couchage et limiter les amplitudes des déplacements verticaux des sièges, le plan de couchage de l'un des sièges est au-dessus d'une position en hauteur des assises des sièges en configuration fauteuil et le plan de couchage d'un autre des siège est en dessous de la position des assises.

Afin que chaque couchage d'un bloc situé derrière un bloc considéré, dans le même sens et sensiblement suivant le même axe, dispose d'une surface de couchage indépendante, la colonne comporte deux zones pieds séparées l'une de l'autre et ouvertes en direction de l'arrière du bloc.

Chaque zone pieds comporte une surface de repos sensiblement dans un plan horizontal, et les zones pieds sont décalées en hauteur de telle sorte que les surfaces de repos se trouvent l'une à la hauteur d'un des plans de couchage du bloc de sorte à se trouver dans le prolongement du plan de couchage ayant la même hauteur dans le bloc situé en arrière du bloc considéré et un autre à la hauteur de l'autre plan de couchage considéré de sorte à se trouver dans le prolongement de cet autre plan de couchage du bloc situé en arrière du bloc considéré.

Dans un mode de réalisation le plan de couchage d'un siège en configuration couchage est déterminé par l'assise dudit siège, le dossier dudit siège, un repose jambes dudit siège et ou un ou des panneaux mobiles, prolongé par une surface de repos d'une zone pieds d'un bloc similaire qui serait placé devant le bloc considéré ou, pour le premier bloc d'une ligne de blocs, d'une colonne isolée ayant des caractéristiques similaires à la colonne d'un tel bloc similaire, l'assise, le dossier, le repose jambes, le ou les panneaux mobiles et la zone de repos étant alignés sensiblement horizontalement et dans un même plan pour former le couchage.

Dans un autre mode de réalisation, le plan de couchage d'un siège en configuration couchage est déterminé par l'assise dudit siège, le dossier dudit siège et un repose jambes dudit siège, ledit repose jambe formant au moins pour partie une surface de repos d'une zone pieds pénétrant dans un espace creux de la colonne d'un bloc similaire qui serait placé devant le bloc considéré ou d'une colonne isolée ayant des caractéristiques similaires à la colonne d'un tel bloc similaire, les dits assise, dossier et repose jambes étant alignés sensiblement horizontalement et dans un même plan pour former le couchage. Dans ce mode de réalisation la structure de la colonne est simplifiée en limitant le nombre de cloisons ce qui permet en autre d'en simplifier l'entretien et le nettoyage.

Pour assurer aux zones pieds, en particulier à la zone pieds du couchage le plus bas, un volume suffisant en particulier une hauteur suffisante d'environ 300mm pour satisfaire le confort des passagers, les plans de couchage de deux sièges contigus, lorsque les sièges sont tous les deux dans la configuration couchage sont décalés en hauteur d'une distance d'environ 330 mm.

Cette hauteur suffisante en général permet de limiter l'amplitude des mouvements des sièges vers le haut et vers le bas et de simplifier les parties mécaniques en charge de permettre les mouvements en question.

La colonne d'un bloc dont les dimensions sont imposées au moins par celles des zones pieds devant être disponibles forme un volume important qui n'est pas utilisé par les zones pieds et qui avantageusement permet d'intégrer de manière relativement aisée des équipements techniques du bloc et ou des équipements de confort ou de distraction à l'usage des occupants de sièges d'un bloc situé derrière le bloc considéré.

Avantageusement, la séparation entre deux sièges contigus comporte une structure fermée entre deux sièges, laquelle structure fermée comporte un panneau d'habillage latéral situé sur un côté de la structure fermée correspondant au siège dont l'assise est descendue lors de la conversion vers la position couchage, ledit panneau d'habillage latéral étant démontable lorsque ledit siège dont l'assise est descendue est en configuration couchage. Ainsi l'accès au volume intérieur de la structure fermée et aux équipements qui y sont installés est possible sans démontage de parties mécaniques du siège.

Pour améliorer les capacités de rangement offert par un bloc, le bloc comporte avantageusement dans sa partie arrière un enfoncement formant espace de stockage, entre le niveau d'un plancher auquel est destiné à être fixé le bloc et la hauteur du couchage le plus bas, traversant ledit bloc dans sa largeur. Un tel espace de stockage, dont la longueur correspond à la largeur du bloc permet de placer des objets allongés habituellement difficiles à ranger.

Dans un mode de réalisation un bloc comporte exactement deux sièges dont les axes longitudinaux sont convergents.

Dans un autre mode de réalisation un bloc comporte exactement trois sièges, deux sièges contigus sur les trois sièges du bloc ayant leurs axes longitudinaux convergents, le troisième siège ayant un axe longitudinal sensiblement parallèle à l'axe longitudinal du siège dont il est le plus voisin dans le bloc, ledit siège dont il est le plus voisin étant un siège dont l'assise se déplace vers le haut lors de la conversion en configuration couchage.

Ainsi en disposant suivant l'invention de bloc de deux sièges ou de bloc de trois siège, il est possible d'optimiser l'aménagement d'un véhicule donné dont la cabine est contrainte au niveau de ses dimensions géométriques, en particulier sa largeur.

L'invention concerne également une cabine ou une partie de cabine pour le transport de passagers comportant au moins une ligne d'au moins deux blocs de sièges, dans lesquels blocs chaque siège d'un bloc de sièges est convertible individuellement, par un mouvement relatif d'éléments du siège, entre une configuration fauteuil, dans laquelle un occupant du siège est dans une position assise, et une configuration couchage, dans laquelle les éléments du siège forme un plan de couchage et dans laquelle un occupant du siège est étendu sensiblement à plat et sensiblement horizontalement, dans lesquels blocs les sièges sont agencés côte à côte et orientés sensiblement dans le même sens, les au moins deux blocs étant agencés l'un derrière l'autre dans un même sens d'orientation des sièges et séparés suivant une direction de la ligne de blocs par un pas **X** caractérisant la distance entre un point de référence de chacun des blocs.

Dans la cabine de l'invention, pour chacun des sièges d'un bloc, suivant dans le sens de l'orientation des sièges un autre bloc le précédant, en configuration couchage, un plan de couchage de chaque siège est prolongé par une zone pieds située en avant du siège à l'intérieur du bloc le précédant dans un espace aménagé, ou colonne, entre les dossiers de sièges du bloc précédent.

En outre, pour éviter les interférences entre les espaces occupés par les couchages d'un bloc dans la colonne du bloc le précédant dans une ligne, les plans de couchage des sièges d'un bloc en configuration couchage sont à des hauteurs différentes au-dessus d'un plancher de la cabine et pour faciliter le passage d'un passager, occupant le couchage le plus haut, entre son siège et l'allée de circulation de la cabine, un siège d'un bloc ayant le plan de couchage situé en hauteur le plus proche du plancher de la cabine est situé d'un côté du bloc bordé par une allée de circulation.

Ainsi la cabine propose aux passagers des couchages de longueur supérieure au pas des sièges ce qui permet d'augmenter le nombre de siège pour une longueur donnée de cabine ou de diminuer la longueur de la cabine pour un nombre de sièges installés.

Pour s'adapter à des contraintes de l'aménagement d'une cabine donnée ou pour proposer des couchages de dimensions différentes, le pas **X** des blocs d'au moins une ligne de blocs est modulé pour former en configuration couchage des couchages de différentes longueurs **L0** suivant le bloc considéré.

Avantageusement le bloc le plus avant dans une ligne de blocs est précédé, vers l'avant dans un sens d'orientation des sièges de ladite ligne, d'une colonne d'aménagement similaire à une colonne d'un bloc afin de disposer du même confort de couchage sur les sièges d'un premier bloc à l'avant d'une ligne de blocs en mettant en oeuvre un bloc conforme aux autres blocs mis en oeuvre dans la ligne de blocs et de manière générale dans la cabine.

Un véhicule pour le transport de passagers, en particulier un véhicule de transport terrestre ou un véhicule de transport maritime ou encore un véhicule de transport aérien, proposant une telle cabine permet de proposer avec une densité améliorée de passagers le confort d'un véritable couchage à plat, en particulier lorsque la durée des voyages ne justifie pas, au regard du service offert des cabines passagers séparées.

La description de modes de réalisation non limitatifs de l'invention est faite en référence aux figures qui représentent de manière schématique :
- Figure 1a :: en vue de dessus, un ensemble de trois blocs de deux sièges suivant l'invention alignés dans une cabine de passagers suivant un premier mode de réalisation ;
- Figure 1b :: en vue de dessus partiellement écorchée, un ensemble de deux blocs de deux sièges suivant l'invention alignés suivant un deuxième mode de réalisation ;
- Figures 2a et 2b :: en perspective, vue de l'arrière sur la figure 2a et vue de l'avant sur la figure 2b, de l'ensemble des trois blocs de la figure 1a ;
- Figures 2c et 2d :: en perspective, vue de l'arrière de l'ensemble des deux blocs de la figure 1b, en configuration couchage figure 2c et en configuration fauteuil figure 2d ;
- figure 3 :: un exemple de plan d'aménagement d'une cabine d'avion suivant l'invention ;
- figures 4a et 4b :: un bloc configuré pour former un compartiment de stockage pour objets allongés vue en perspective de l'arrière figure 4a et vue de profil figure 4b ;
- figure 5 :: des détails d'un agencement de capots de protection mobile d'un siège dont l'assise est descendue en configuration couchage illustrés suivant trois positions de l'assise ;
- figure 6 :: en vue de dessus, un ensemble de trois blocs de trois sièges suivant l'invention alignés dans une cabine de passagers ;
- figures 7a et 7b :: un exemple d'agencement de bloc à trois sièges convertibles en couchage suivant une vue en perspective depuis l'arrière figure 7a et en vue de face figure 7b.

La présente invention concerne un siège 3 convertible entre une position fauteuil, dans laquelle un occupant du siège est dans une position assise, et une position couchage à plat, dans laquelle un occupant du siège est étendu sensiblement à plat et sensiblement horizontalement.

Plus particulièrement l'invention concerne un agencement côte à côte d'au moins deux sièges convertibles individuellement en couchage à plat, dit bloc 2, et concerne un moyen de transport de passagers, par exemple un d'avion, dont une cabine 1 ou une partie de cabine met en oeuvre au moins deux blocs agencés en ligne l'un derrière l'autre.

Dans la présente description et les dessins associés, un numéro de repère désignant un même élément ou un élément similaire sera le cas échéant suivi de l'indice « a » lorsqu'il se réfèrera à l'élément dans une configuration « fauteuil » du siège, de l'indice « b » lorsqu'il se réfèrera à l'élément dans une configuration « relax » du siège et de l'indice « c » lorsqu'il se réfèrera à l'élément dans une configuration « couchage » du siège, ces différentes configurations étant détaillées dans la description à suivre.

Par exemple un siège sera porteur du repère 3 de manière générale, le repère 3a désignant un siège en configuration fauteuil, le repère 3b un siège en configuration relax et le repère 3c un siège en configuration couchage.

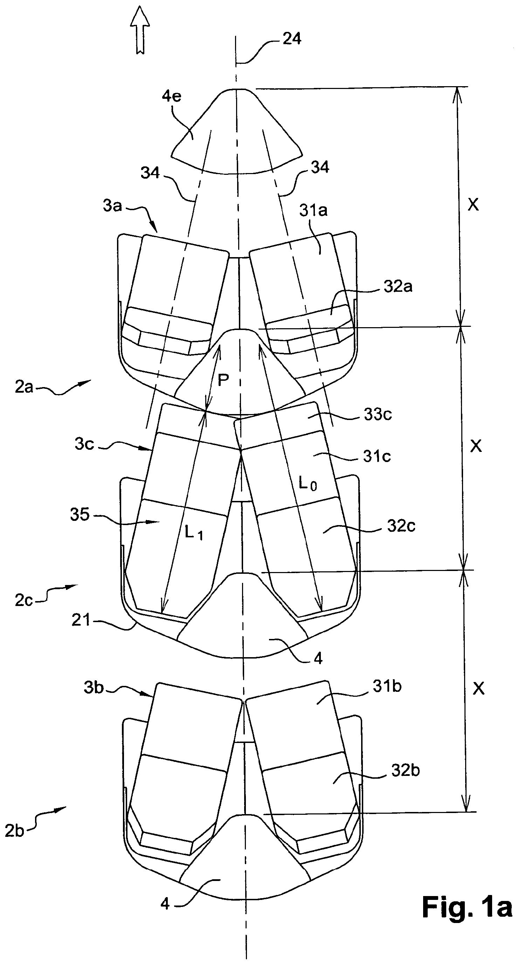

La figure 1a représente, en vue de dessus, trois blocs 2, de deux sièges dans cette exemple, alignés les uns derrière les autres d'une rangée de blocs pouvant en comporter un nombre quelconque suivant un arrangement similaire en fonction des dimensions de la cabine.

Bien que non obligatoire, les sièges sont le plus souvent orientés l'occupant d'un siège regardant vers l'avant de la cabine dans le sens du déplacement, matérialisé par une flèche sur la figure, et cette convention de sens sera utilisée dans la suite de la description détaillée.

D'une manière générale dans la présente description, sauf précision contraire, les termes et expressions « avant », « arrière », « haut », « bas », « au-dessus », « en dessous », « vers l'avant », « vers l'arrière », « vers le haut », « vers le bas »... ont le sens commun que leur donnerait un occupant du siège par rapport à sa position lorsqu'il est assis en configuration fauteuil.

Sur la figure 1a les sièges 3a du bloc 2a le plus avant sont illustrés en configuration fauteuil, les sièges 3c du bloc 2c intermédiaire sont illustrés en configuration couchage à plat et les sièges 3b du bloc 2b arrière sont illustrés dans une configuration relax correspondant à un réglage des sièges intermédiaire entre la position de la configuration fauteuil et la position de la configuration couchage à plat.

De manière connue un siège 3 comporte principalement une assise 31, un dossier 32 et éventuellement un repose jambes 33.

De manière également connue, en configuration fauteuil du siège 3a le dossier 32a est redressé dans une position proche de la verticale et le repose jambe 33, non visible en vue de dessus sur les sièges 3a du bloc avant 2a est replié vers le bas pour reproduire la configuration classique d'un siège ou d'un fauteuil.

En configuration de couchage à plat du siège 3c l'assise 31c, le dossier 32c et le repose jambe 33c sont dans une position sensiblement horizontale et alignés pour former un plan de couchage 35.

Enfin en configuration relax du siège 3b l'assise 31b et le dossier 32b forment un angle ouvert vers le haut, le dossier étant incliné vers l'arrière, et le cas échéant l'assise 31b et le repose jambes 33 forment un angle ouvert vers le bas de sorte que le siège 3b présente un profil en forme de Z couché plus ou moins ouvert.

Chaque siège comporte un axe longitudinal 34 correspondant en vue de dessus à la trace d'un plan de symétrie vertical du siège 3 et un bloc 2 comporte un axe longitudinal 24 correspondant en vue de dessus à la trace d'un plan de symétrie vertical du bloc, les deux sièges 3 d'un bloc étant eux-mêmes agencés dans le bloc côte à côte avec une position longitudinale similaire dans le bloc 2 et sensiblement orienté dans un même sens.

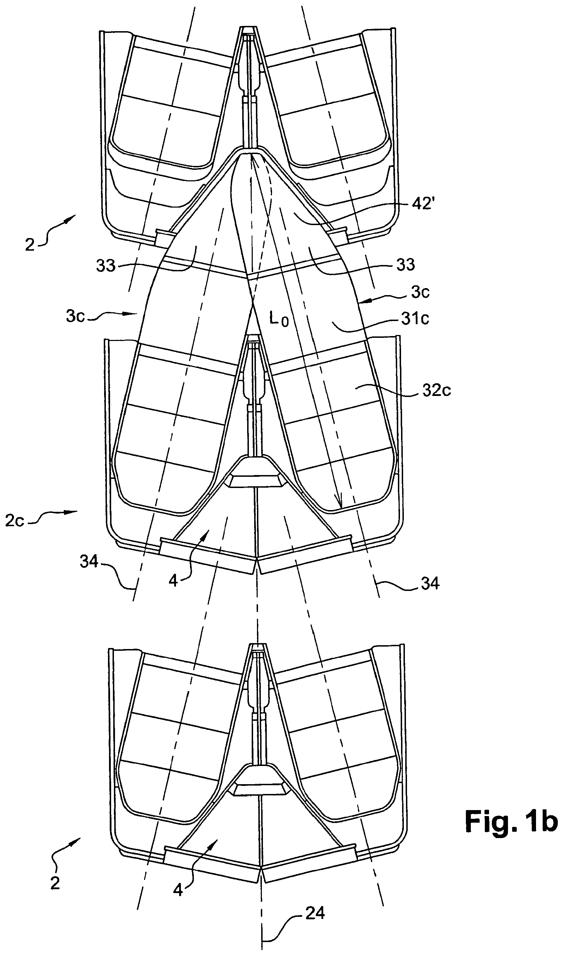

Cependant, comme il est bien visible sur la figure 1a ou la figure 1b les sièges 3 présentent la particularité de ne pas être orientés exactement dans le même sens et les axes longitudinaux 34 de chacun des deux sièges d'un bloc 2 convergent vers l'axe dudit bloc en avant des sièges.

Dans les modes de réalisation illustrés préférés des figures 1a et 1b, l'agencement des sièges d'un bloc est symétrique et les axes des deux sièges du bloc converge en pratique, en vue de dessus, vers un même point de convergence situé en avant des sièges, sensiblement dans le plan de symétrie vertical du bloc.

Cette configuration convergente est associée à un espace de séparation entre les deux sièges 3 d'un bloc 2 donné correspondant entre les dossiers des dits sièges à l'emplacement d'une colonne 4, intégrée dans la structure du bloc 2.

La colonne 4 est située sensiblement au niveau de la convergence des axes longitudinaux 34 des deux sièges 3 situés dans un bloc immédiatement dans la ligne de bloc derrière le bloc 2 considéré dans un emplacement où la distance entre lesdits axes longitudinaux est réduite.

Plus particulièrement la convergence des axes longitudinaux 34 des deux sièges 3 est telle que lorsqu'un siège 3 d'un bloc situé juste en arrière du bloc 2 considéré est placé dans la configuration de couchage à plat, la colonne 4 se trouve, en vue de dessus, d'une part sensiblement dans le prolongement du couchage formé et d'autre part au niveau des pieds d'un occupant du siège dans la configuration couchage.

Ainsi, comme l'illustre les figures 1a et 1b, la colonne 4 intégrée dans un bloc est dans le prolongement du couchage formé par chacun des deux sièges 3c du bloc 2c situé immédiatement derrière dans la ligne de bloc.

Suivant un mode de réalisation correspondant au cas illustré sur la figure 1a, une particularité des sièges de l'invention est que la surface de couchage formée par le dossier 32c, l'assise 31c et le repose jambe 33c d'un siège est inférieure suivant une longueur **L1** dite longueur de base, dans le sens d'une direction longitudinale de la couchette correspondant sensiblement à la direction de l'axe longitudinal 34 du siège, à une longueur **L0** souhaitée pour le couchage à plat et qu'une dimension de la colonne 4 suivant les directions des axes 34 des sièges 3 du bloc 2 situé en arrière de ladite colonne, dite profondeur **P** de la colonne, correspond sensiblement à la longueur supplémentaire qui doit être ajoutée à la longueur de base **L1** pour obtenir la longueur **L0** recherchée pour le couchage.

La colonne 4 d'un bloc délimite ainsi, à l'avant de chaque siège 3 du bloc situé immédiatement en arrière, un espace associé à chaque siège à l'avant du siège considéré en configuration couchage, dit zone pieds 41, dans lequel, sous réserve des aménagements détaillés ci-après, les pieds d'un occupant du siège en configuration couchage à plat peuvent être introduit si la taille de la personne le nécessite.

On comprend donc que la colonne 4 est, au moins dans le prolongement de chaque couchage à plat, d'une part creuse et d'autre part ouverte dans la direction de chaque siège 3 du bloc 2 situé en arrière.

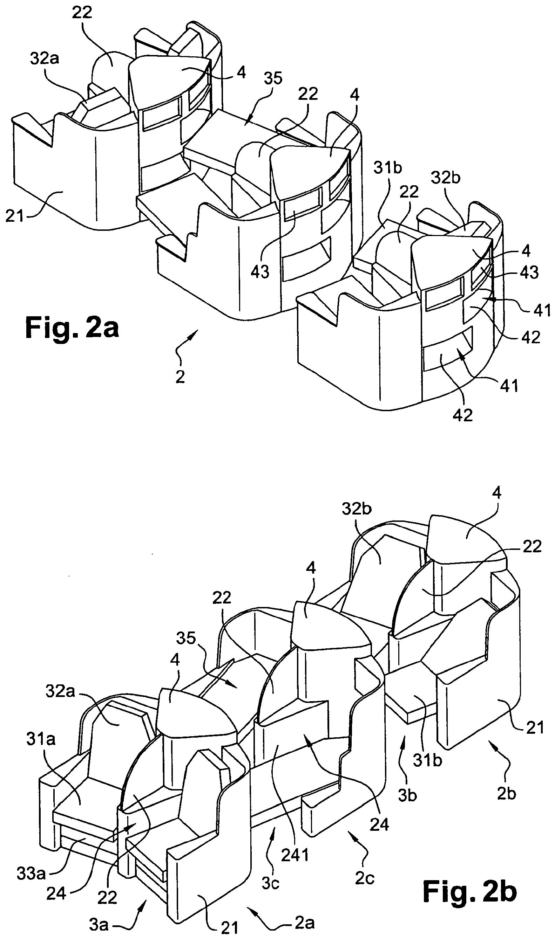

En outre, pour assurer le repos des pieds, une surface de repos 42 sensiblement horizontale, avec un capitonnage éventuel adapté à cet usage, est positionnée dans le prolongement et à la même hauteur que les autres surfaces du couchage à plat comme illustré sur la figure 2a.

On comprend également que la profondeur **P** ici considérée est une dimension intérieure de la partie creuse de la colonne 4 dont des parois présentent nécessairement une certaine épaisseur, même si cette épaisseur peut être relativement réduite compte tenu de charges limitées subies par la structure de la colonne 4, et que la hauteur de la surface de repos 42 est a priori fixe.

Compte tenu de leurs dispositions géométriques et du fait de la convergence des axes 34 des deux sièges, en vue de dessus, comme illustré sur la figure 1a, les zones pieds 41, correspondant aux deux sièges du bloc situés en arrière, d'une même colonne 4 se superposent au moins partiellement au niveau d'une zone d'interférence, en particulier lorsque lesdites zones pieds sont d'une largeur suffisante pour garantir le confort de l'occupant du siège dont les deux pieds doivent pouvoir atteindre simultanément l'extrémité du couchage.

Pour résoudre le conflit apparent entre les volumes déterminant les deux zones pieds 41 d'une colonne 4, une autre particularité de l'invention concerne les positions en hauteur relatives des plans de couchage à plat 35 des deux sièges 3 d'un même bloc 2.

En se reportant à la figure 2a qui illustre l'ensemble des trois blocs de la figure 1a en perspective vue partiellement de l'arrière, on constate que les zones pieds 41 d'une colonne 4 d'un bloc 2 sont décalées en hauteur de sorte que chaque siège du bloc situé en arrière dispose d'une zone pieds 41 dédiée et totalement isolée de la zone pieds de l'autre siège.

Ce décalage en hauteur permet de profiter pour chaque zone pieds 41 de toute la profondeur et de toute la largeur possibles de la colonne 4.

Pour que les zones pieds 41 décalées en hauteur soient utilisables par les sièges 3 en position de couchage à plat, le plan de couchage 35 de chaque siège 3 est placé à la même hauteur que la surface de repos 42 des zones pieds 41 située dans son prolongement, c'est à dire que les plans de couchage 35 des deux sièges 3 d'un même bloc 2 en position de couchage à plat sont décalés en hauteur.

Lorsque les sièges 3 de l'invention sont mis en oeuvre pour être convertis depuis la configuration fauteuil, dans laquelle a priori les assises 31 des sièges 3 sont situées sensiblement à la même hauteur par rapport à un plancher de la cabine, vers une configuration de couchage à plat, l'un des sièges 3 du bloc 2 subit un mouvement d'ensemble vers le bas alors que le siège voisin dudit bloc subit un mouvement d'ensemble vers le haut.

Ces mouvements vers le bas et vers le haut sont dans l'absolu des mouvements relatifs entre les deux sièges, le résultat important étant d'atteindre le décalage en hauteur par rapport au plancher recherché entre les positions finales couchées et l'alignement en hauteur de chaque plan de couchage 35 avec la surface de repos 42 correspondante.

En pratique, pour éviter des mouvements de grandes amplitudes dans le sens vertical pour l'un des sièges et également pour éviter d'avoir un des couchages trop haut ou un des couchages trop bas, il est avantageux de partager le déplacement vertical à réaliser entre les deux sièges du bloc.

Les mouvements d'un siège 3 d'un bloc 2 sont de préférence indépendants des mouvements de l'autre siège du bloc.

Afin de permettre le déplacement vers le bas de l'assise 31 du siège qui est descendu lors de la conversion depuis la position fauteuil vers la position couchage, des habillages de protection 36 situés sous l'assise sont réalisés mobiles afin de s'effacer lors du déplacement de l'assise.

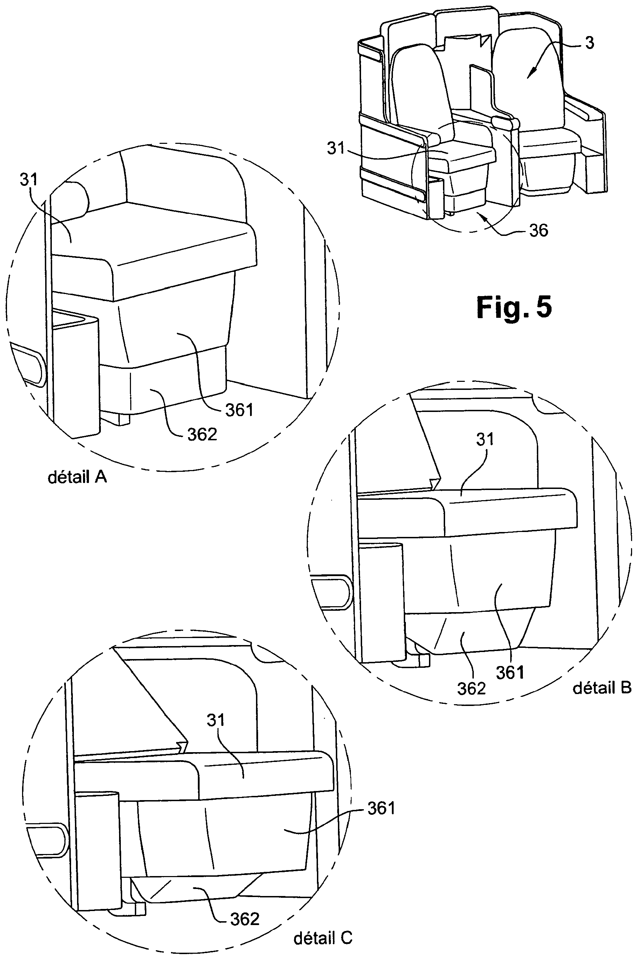

Comme illustré sur la figure 5, les habillages de protection 36 en plus de leur côté esthétique ont un rôle de sécurité en évitant que des objets, des vêtements ou des personnes ne risquent de se trouver coincés par les différentes parties mobiles ou les mécanismes assurant le mouvement lors d'une conversion. Pour que l'habillage de protection 36 assure correctement ses fonction dans toutes les positions de l'assise, une partie inférieure 362 de l'habillage situé sous l'assise est articulée sur une partie supérieure 361 de cet habillage.

Lorsque l'assise 31 est en position fauteuil, c'est à dire en position haute pour le fauteuil considéré, comme sur le détail a de la figure 5, la partie inférieure 362 de l'habillage est maintenue vers le bas par exemple par des moyens ressorts ou tout élément élastique adapté et lorsque l'assise est déplacée vers la position couchage, c'est à dire la position basse pour le fauteuil considéré, ladite partie inférieure, articulée sur la partie supérieure 361 de l'habillage 36 ou sur des éléments de structure de l'assise est poussée progressivement, détail b et détail c de la figure 5, de sorte à ne pas entraver le mouvement du siège 3 tout en continuant à protéger les zones situées sous l'assise 31.

Dans un exemple de réalisation, considérant une valeur courante de la hauteur de l'assise d'un fauteuil au-dessus du plancher de la cabine de 430mm environ, le plan de couchage 35 du siège prenant la position la plus basse est descendu de 130mm pour maintenir le plan de couchage de ce siège à environ 300mm au-dessus du plancher de la cabine et le plan de couchage du siège prenant la position la plus haute est relevé de 200mm, soit 330mm au-dessus du plan de couchage le plus bas, afin de réaliser une zone pieds 41 ayant au moins 300mm de hauteur, pour la zone pieds la plus basse, compte tenu des épaisseurs des panneaux et capitonnages nécessaires.

Les mouvements nécessaires des différentes parties des sièges sont réalisés par tout dispositif ayant une cinématique adaptée aux mouvements et combinaisons de mouvements voulues.

Le mouvement vertical désiré est par exemple obtenu soit par un dispositif commun aux mouvements des parties du siège 3 : dossier 32, assise 31 et repose-jambes 33, pour assurer la conversion entre la configuration fauteuil et la configuration couchage, ou obtenu par un dispositif séparé du dispositif assurant les mouvements des parties du siège 3 entre elles, par exemple un mécanisme dédié au mouvement vertical tel qu'une colonne télescopique ou un pantographe soutenant l'assise et associé à un actionneur non représenté sur les figures.

Avantageusement les différents mouvements sont réalisés par un ou des actionneurs électriques intégrés dans le siège 3 et pouvant être commandés depuis le siège par son occupant.

En pratique, le mouvement vertical d'un siège 3 doit être réalisé pour éviter les interférences mécaniques qui pourraient se produire entre les deux sièges voisins d'un bloc 2 lors du passage en configuration de couchage à plat en particulier au niveau de la partie la plus avant du siège, par exemple l'assise 31 ou le repose jambes 33 lorsqu'un repose jambe est utilisé.

En cas de besoin, chaque siège 3 est pourvu de limitations des mouvements sous la forme de butées mécaniques ou d'une logique de commande des actionneurs afin d'éviter des combinaisons de mouvements de parties mobiles des sièges provoquant des interférences mécaniques.

La description d'un exemple préféré de réalisation est susceptible de variantes à la portée de l'homme du métier sans sortir du cadre de la présente invention.

Par exemple un siège peut ne pas comporter de configuration relax intermédiaire entre la configuration fauteuil et la configuration couchage à plat ce qui permet de simplifier la cinématique et les moyens de contrôle des mouvements du siège 3 ou au contraire, pour offrir à son occupant le maximum de possibilités de réglages, comporter une pluralité de positions intermédiaires, voire être réglable en position de manière continue entre les positions extrêmes ou entre la configuration fauteuil et une position intermédiaire.

Dans un mode de réalisation, le siège 3 ne comporte pas de repose jambes 33 ou comporte un repose jambes de dimensions réduites. Ledit siège comporte principalement une assise 31 et un dossier 32, comme détaillé précédemment, et éventuellement le repose jambes de dimensions réduites, qui forment une partie du couchage à plat. Dans ce mode de réalisation, si un espace reste ouvert entre un bord avant de l'assise 31 ou du repose jambes en configuration couchage et la zone pieds 41, ledit espace ouvert est refermé par un panneau mobile, non représenté mais équivalent fonctionnellement au repose jambes 33 dans la position de la configuration couchage.

Un tel panneau mobile est stocké, lorsque le siège est en configuration fauteuil par exemple sous l'assise 31 du siège, ou dans la colonne 4, ou dans la zone pieds 41, ou encore dans une banquette ou une cloison. Ledit panneau mobile est par exemple coulissant ou articulé ou encore détachable et il peut résulter d'un assemblage de panneaux dont l'agencement en position déployée vient compléter la surface de couchage à plat 35.

Dans un autre mode de réalisation, le repose jambes est au contraire développé en longueur afin, en position couchage, de s'étendre vers l'avant du siège 2 à l'intérieur de l'espace creux de la colonne 4 dans la zone pieds 41 et de former la partie du plan de couchage dans le prolongement du dossier et de l'assise pour atteindre la longueur voulue pour le couchage.

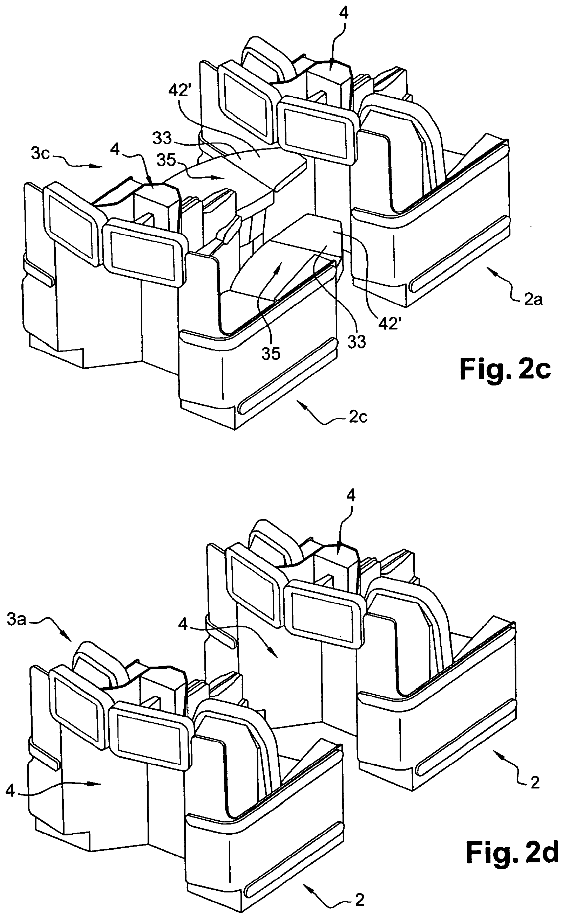

Dans ce cas, illustré sur les figure 1b, 2c et 2d, le repose jambes 33 comporte une surface de repos 42' pour les pieds de l'occupant du couchage, surface de repos 42' qui se substitue à la surface de repos 42 intégrée dans la zone pieds 41 du mode de réalisation décrit précédemment. Comme dans le mode de réalisation décrit précédemment, les plans de couchage 35 sont décalés en hauteur afin que les surfaces de repos 42' des deux sièges 3c, en pratique les reposes jambes 33, se trouvent superposées, au moins partiellement, en position couchage dans la colonne 4.

Dans ce mode de réalisation, l'espace creux de la colonne 4 ouvert du côté arrière du bloc 2 ne comporte plus nécessairement de surfaces de repos pour les pieds intégrées, ou ne comporte que des surfaces réduites, cas non illustré, et ledit espace creux ne comporte plus, comme illustré sur les figures 2c et 2d de cloisons qui soient susceptibles de gêner le déploiement du repose jambe 33 lors de la conversion.

Pour assurer une meilleure séparation des espaces dédiés à chaque occupant d'un siège, des cloisons, non représentées, peuvent cependant être agencées dans l'espace creux de la colonne 4, pour autant que ces cloisons n'interfèrent pas avec les reposes jambes.

Dans une forme de réalisation, non illustrée, l'orientation de l'axe 34 d'un siège est modifiée en fonction de la configuration dans laquelle le siège est placé.

Par exemple l'axe 34 du siège est orienté parallèlement à l'axe 24 du bloc lorsque le siège est en configuration fauteuil ou en configuration relax et l'axe 24 du siège est orienté pour converger vers un point de l'axe du bloc comme décrit précédemment lorsque le siège est en configuration couchage pour tirer avantage de la colonne 4 du bloc situé en avant. Le changement de l'orientation de l'axe 34 du siège est réalisé par exemple par une rotation de l'assise 32 lors de la conversion vers ou depuis la configuration couchage.

Comme déjà précisé, les orientations des blocs 2 peuvent différer du sens du déplacement du véhicule, en particulier les blocs ou certains des blocs d'une cabine peuvent être orientés face avant des blocs vers l'arrière du véhicule, ou s'éloigner plus ou moins d'un axe du véhicule pour répondre à des contraintes d'installation particulières.

Les limites de ces orientations sont avant tout dictées par des motivations de confort et éventuellement par des raisons de sécurité ou de réglementation, le bénéfice de l'invention étant obtenu par la disposition en ligne d'au moins deux blocs de sièges comme illustré sur les différentes figures.

Dans une forme préférée de réalisation correspondant aux cas illustrés sur les figures 2a à 2d, un bloc 2 de deux sièges 3 comporte une coque extérieure 21 constituant, avec l'assise 31, le dossier 32 et la colonne 4, la partie visible du bloc.

Cette coque 21, par exemple réalisée en matériaux composites en raison des possibilités que permettent ces matériaux en termes de formes réalisables avec des rigidités et des masses avantageuses, est réalisée en une partie ou en un assemblage de parties et enveloppe les mécanismes assurant les mouvements des éléments des sièges pour des raisons esthétiques et de sécurité des occupants des sièges.

Avantageusement les volumes de la colonne 4 dans laquelle sont agencées les zones pieds 41 et qui ne sont pas occupés par les dites zones pieds sont utilisés pour former des volumes de rangements des effets personnels des occupants des sièges ou pour l'installation de dispositifs essentiels ou accessoires du siège tels que des alimentations des actionneurs de siège et leurs sécurités ou tels que des équipements de confort, éclairages et aérateurs individuels par exemple, ou de divertissement pour les occupants des sièges, en particulier des écrans vidéo 43 comme illustré sur la figure 2, ou encore d'espaces de rangements.

La zone pied du couchage le plus bas étant situé sensiblement au-dessus du plancher de la cabine dans laquelle les bloc 2 sont fixés, il est avantageux de réaliser dans la partie inférieure à l'arrière du bloc un enfoncement vers l'avant, dont la hauteur reste inférieure à celle du couchage le plus bas, qui détermine un volume traversant latéralement le bloc.

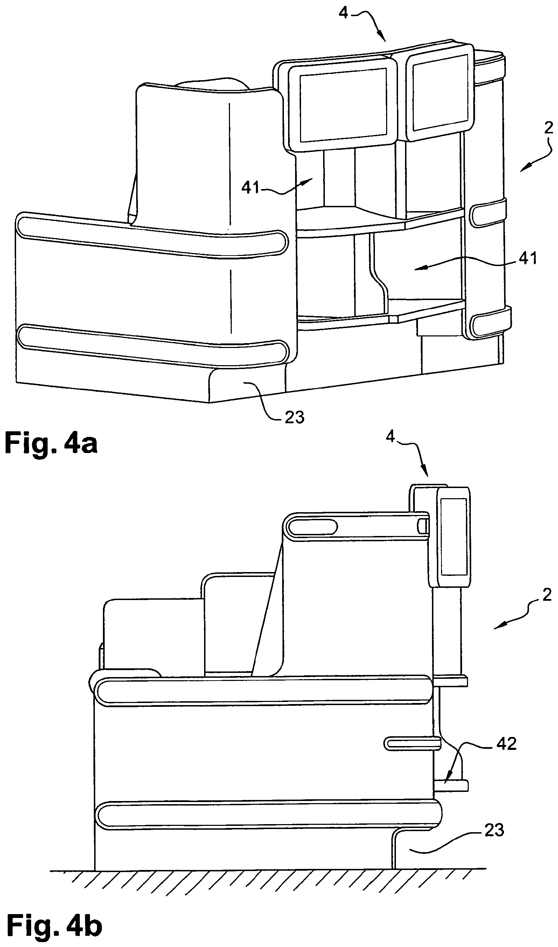

Un tel volume traversant 23 est illustré sur le mode de réalisation présenté sur les figures 2c et 2d et sur les figures 4a et 4b. Comme l'illustrent clairement les figures 4a et 4 b, le volume 23 permet aux occupants des sièges de ranger des objets allongés sans que ceux-ci n'entravent la circulation des occupants ou d'autres passagers dans les allées et améliore ainsi le confort et la sécurité.

D'autres éléments accessoires sont avantageusement associés à la coque 21 d'un bloc.

En particulier une cloison de séparation 22 des deux sièges 3 d'un bloc 2, visible notamment sur les figures 2a et 2b, est agencée en avant de la colonne 4 intégrée dans le bloc considéré.

Dans un mode de réalisation préféré, cette cloison 22 comporte au moins une position escamotée, au moins partiellement, permettant aux occupants des deux sièges côte à côte de mener une conversation dans de bonnes conditions, et au moins une position développée dans laquelle chaque occupant d'un siège bénéficie d'une intimité relative.

Dans un agencement avantageux, des moyens techniques associés à un bloc pour les besoins du fonctionnement des sièges dudit bloc, par exemple des moyens d'alimentation en énergie, des équipements de contrôle ou de commande ou encore des éléments de sécurité, sont agencés entre deux sièges d'un bloc à l'intérieur d'une structure fermée 24 séparant les deux sièges. En outre la structure fermée 24 est pourvue d'au moins un panneau d'habillage latéral 241 démontable situé du côté du siège 3 dont l'assise descend lorsque le siège est placé en configuration couchage et tel que des moyens de fixation dudit panneau latéral sur ladite structure sont accessibles lorsque le siège est en position couchage comme illustré sur la figure 2b par exemple.

Dans cette position, les moyens de fixation peuvent alors être aisément démontés et le panneau d'habillage 241 déposé par un opérateur de maintenance dans un minimum de temps et d'opérations, et l'opérateur de maintenance est en mesure d'accéder sans difficulté à l'ensemble des équipements agencés dans la structure intermédiaire 24 et placés dans ladite structure intermédiaire, par conception, pour être atteint sans déposer le siège 3.

En outre, bien que les dessins illustrent des blocs 2 de deux sièges parfaitement symétrique à l'échelle des dessins, la symétrie des blocs ou des sièges par rapport à leurs plans de symétrie vertical respectifs peut ne pas être parfaite sans sortir du cadre de la présente invention.

Par exemple les deux sièges 3 d'un même bloc 2 peuvent avoir des positions longitudinales ou des angles de convergence vers l'axe du bloc légèrement différents, par exemple pour des raisons d'optimisation d'installation ou d'assemblage, sans que les bénéfices de l'invention ne soient remis en cause.

L'invention concerne également un bloc 2 de trois sièges agencés côte à côte.

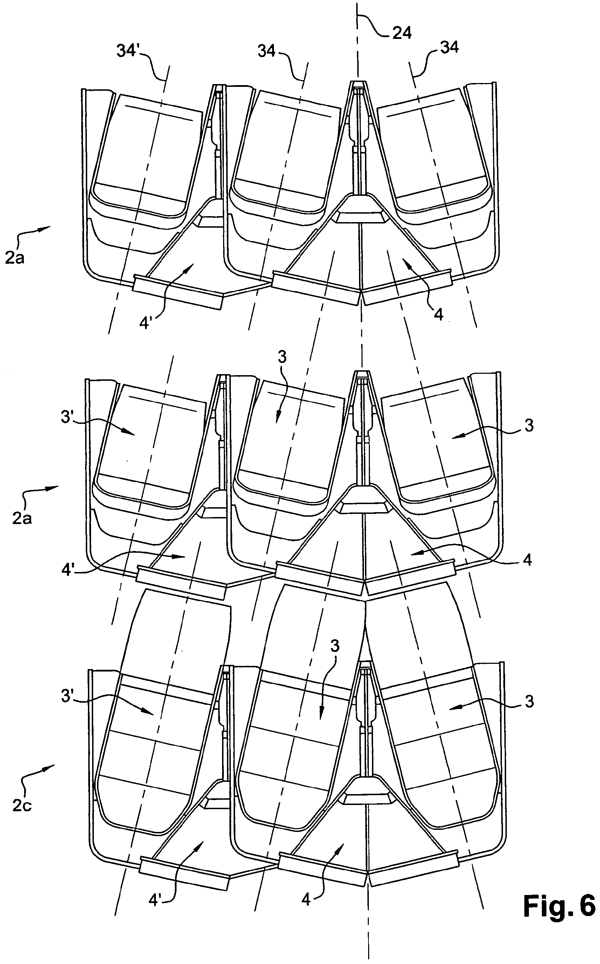

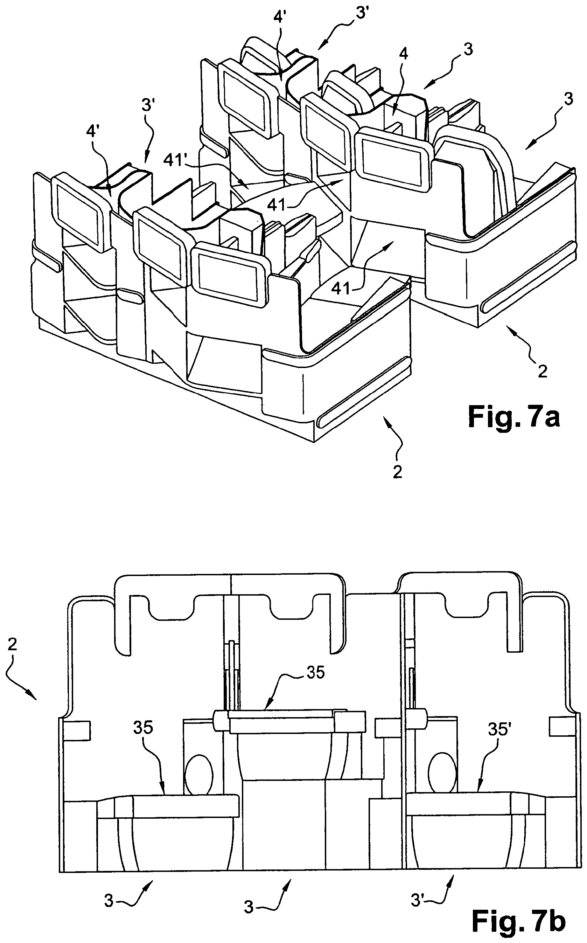

Un tel agencement de bloc est présenté sur les figures 6, 7a et 7b.

Dans ce cas deux sièges 3 mitoyens parmi les trois sièges sont agencés de manière similaire à celle décrite pour un bloc de deux sièges, c'est à dire notamment avec une convergence vers l'avant des axes longitudinaux 34 desdits deux sièges et un décalage en hauteur desdits deux sièges en position couchage comme visible sur les figures 7a et 7b.

Le troisième siège 3' du bloc considéré est alors agencé latéralement sur le côté libre du siège 3 dont le couchage est le plus haut et dont l'autre côté duquel se trouve le siège convergent.

En outre ledit troisième siège 3' est tel que :
- son axe longitudinal 34' est sensiblement parallèle à l'axe 34 du siège qui lui est voisin, et qui se trouve donc être le siège central du bloc de trois siège ;
- de préférence son plan de couchage 35' est en dessous du plan de couchage 35 du siège qui lui est voisin, a priori à une hauteur correspondant sensiblement à la hauteur du plan de couchage du siège situé sur l'autre côté du bloc de trois sièges.

Ainsi suivant cette agencement, lorsque les trois sièges d'un bloc sont en position couchage, le plan de couchage du siège situé entre les deux autres sièges, ou siège central, dans le bloc se trouve au-dessus du plancher à une hauteur supérieure à celles des sièges situés de chaque côtés sur les bords latéraux du bloc.

Une telle configuration permet d'agencer trois sièges de front dans une cabine avec une allée de circulation de chaque côté du bloc en permettant à l'occupant du siège central de rejoindre l'une ou l'autre des allées sans être gêné par les occupants des sièges situés sur les bords du bloc.

Comme il est visible sur la figure 6 en vue de dessus d'un agencement de trois blocs 2 de trois siège, une colonne secondaire 4' est agencée dans la partie arrière du bloc 2 entre le siège 3 central et le siège 3' dont l'axe longitudinal 34' est sensiblement parallèle à l'axe longitudinal 34 dudit siège central.

L'agencement de cette colonne secondaire 4' est facilité en raison du décalage angulaire de l'axe 34' du siège 3' par rapport à l'axe 24 de la rangée de blocs correspondant comme dans le cas des blocs de deux sièges à un axe du plan de symétrie général des sièges 3 dont les axes longitudinaux 34 convergent.

La colonne secondaire 4' d'un bloc 2 de trois sièges comporte également un espace creux permettant de former une zone pieds 41' pour l'occupant du siège correspondant du bloc situé immédiatement derrière le bloc considéré et d'offrir un confort équivalent pour les trois sièges en position couchage.

On comprend que les divers modes de réalisation et les agencements de blocs possibles avec des blocs de deux sièges sont également possibles avec des blocs de trois sièges.

L'invention concerne également un agencement d'une cabine 1 d'un véhicule de transport, par exemple une cabine d'un véhicule terrestre tel qu'un autobus ou un train, d'un véhicule de transport maritime tel qu'un navire de surface ou un aéronef tel qu'un avion, pour le transport de passagers dans lequel agencement des sièges 3 pour les passagers sont disposés en lignes de blocs 2, au moins une ligne d'au moins deux blocs, de deux sièges 3 conformes aux blocs décrits précédemment.

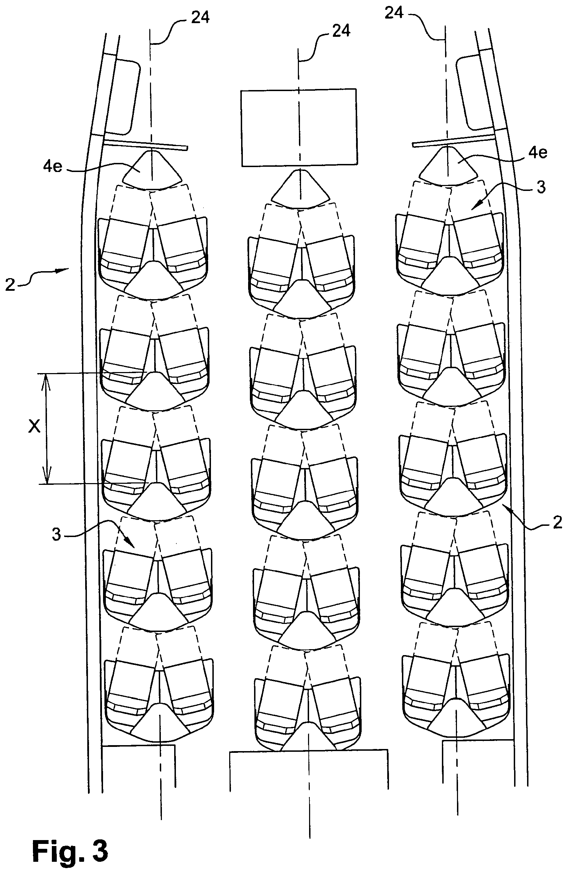

La figure 3 illustre un tel exemple d'agencement d'une cabine d'avion comportant trois lignes de cinq blocs 2 de deux sièges tous orientés de sorte que les passagers sont en configuration fauteuil assis face vers l'avant de l'avion, ces valeurs tant en nombre de lignes qu'en nombre de blocs par ligne et cette orientation ayant un caractère arbitraire pour l'illustration et ne traduisant aucun caractère limitatif de l'invention.

Pour des raisons industrielles et économiques, les différents blocs sont de préférence identiques ou ne diffèrent que par des caractères secondaires, par exemple en raison d'une position ou d'un environnement spécifique dans la cabine. Toutefois des agencements de cabine combinant des blocs de deux sièges et des blocs de trois sièges sont possibles et peuvent s'avérer avantageux lorsque la largeur d'une cabine évolue, comme c'est le cas vers l'avant ou vers l'arrière d'un fuselage d'avion.

Dans un tel agencement le pas **X** des sièges 3, c'est à dire également le pas des blocs 2 de sièges, correspondant à la distance entre deux blocs successifs séparant un point de référence des sièges, est déterminé par la longueur **L0** du couchage diminuée de la profondeur **P** des zones pieds 41, ainsi que par l'angle formé par l'axe 34 des sièges par rapport à l'axe 24 de la ligne de blocs ayant un effet multiplicatif sur la distance nécessaire par le cosinus dudit angle.

De préférence les blocs sont réalisés et agencés dans la cabine de sorte que le siège 3 d'un bloc dont le plan de couchage 35 est le plus bas par rapport au plancher de la cabine, en configuration couchage, se trouve du côté d'une allée.

Ainsi, lorsque l'accès à une allée par l'occupant du couchage le plus haut nécessite d'enjamber le couchage le plus bas, ce mouvement s'en trouve grandement facilité, d'autant plus que dans sa partie avant le plan de couchage inférieur est partiellement sous le plan de couchage supérieur, réduisant d'autant la largeur à enjamber.

Cette situation se rencontre dans le cas des lignes de blocs se trouvant sur les côtés de la cabine le long des parois du fuselage dans le cas de la figure 3, le passager occupant la couchette du côté de la paroi ne pouvant accéder à l'allée qu'en enjambant la couchette du côté de l'allée.

Cette contrainte se retrouve également dans une configuration d'aménagement mettant en oeuvre des blocs de trois sièges ou encore une configuration, non représentée, qui comporte deux lignes de blocs sans allée entre les dites deux lignes, par exemple dans une configuration d'un fuselage dont la largeur permet d'installer quatre lignes de blocs dont deux lignes sont rapprochées, quasiment jointives, et encadrées par une allée de chaque côté des dites deux lignes rapprochées.

Pour permettre aux sièges 3 du premier bloc 2 à l'avant d'une ligne de blocs de bénéficier de la configuration couchage avec la longueur de couchage souhaité, une colonne 4e, similaire à la colonne 4 d'un bloc 2 mais non intégrée dans un bloc, est agencé dans la cabine 1 à l'emplacement que cette colonne aurait si un autre bloc se trouvait devant le bloc considéré.

Cette colonne 4e peut être isolée comme dans l'exemple illustré sur la figure 3 ou avantageusement être intégrée dans d'autres aménagements, par exemple des cloisons de séparation de la cabine, des vestiaires ou des meubles de rangement.

Le bloc le plus arrière d'une ligne de bloc est également dans une situation particulière, n'étant suivi d'aucun bloc en arrière.

Avantageusement la colonne de ce bloc est utilisée pour créer des espaces de rangement, intégrés ou non à des aménagements dans une partie arrière de la cabine 1.

Dans un exemple de réalisation, les logements de pieds 41 des colonnes 4 ont des profondeurs **P** de 500mm environ et le pas **X** des sièges est de 1524mm (60 pouces) permettant de réaliser avec ce pas de siège, généralement associé à des sièges limités à la configuration relax, des couchages à plat de 1800mm au moins.

Ainsi un aménagement comportant cinq blocs par ligne, comme l'aménagement présenté sur la figure 3, exige une longueur de cabine inférieure de 1380mm à celle qui serait nécessaire pour installer un nombre équivalent de couchage à plat de même longueur utilisant les sièges connus dans les aménagements actuels.

On remarquera que ce gain en longueur de couchage pour un pas de sièges diminué est réalisé au prix d'un élargissement des blocs de sièges en raison de la présence de la colonne 4 entre les deux sièges 3 d'un bloc 2.

Cet élargissement est cependant maîtrisé par une combinaison des formes choisies pour les différents éléments constituant un bloc.

D'une part la colonne 4 présente en vue de dessus une section globalement triangulaire dont une pointe est orientée vers l'avant, forme rendue possible par la convergence des axes 34 des sièges de chaque bloc 2.

Cette forme permet de limiter l'écartement nécessaire au niveau des dossiers 32 dans la configuration fauteuil, les dossiers 32a étant, comme illustré sur le bloc avant 2a de la figure 1, dans une position relativement avancée dans laquelle la colonne est de largeur relativement réduite.

D'autre part les dossiers 32 des sièges 3 présentent une largeur diminuée au niveau d'une partie supérieure du dossier en configuration fauteuil. La zone de cette largeur diminuée correspond pour un adulte de morphologie courante à une zone d'appui de la tête qui n'exige pas une largeur aussi importante que dans une zone dorsale.

Ainsi, lorsque le dossier est incliné vers l'arrière pour placer le siège en configuration relax ou en configuration couchage, la partie supérieure du dossier 32 est en mesure de prendre une position plus arrière qu'en configuration fauteuil sans interférence avec la colonne 4.

Ainsi, comme l'illustre la figure 1 au niveau du bloc intermédiaire représenté en configuration couchage, la forme du dossier 32c est adaptée à la présence de la colonne 4 et permet également de réduire la largeur maximale de la coque 21, du côté opposé à la colonne 4, que cette dernière devrait avoir si le dossier 32 avait une largeur constante.

Dans un exemple de réalisation, sans qu'il soit fait de concession toujours possible sur la largeur de l'assise des sièges, c'est à dire en maintenant l'assise 31 avec une largeur confortable de 533mm (21 pouces), la largeur des blocs 2 de deux sièges est portée de 1372mm (54 pouces) dans une configuration conventionnelle, comportant deux sièges côte à côte sans séparation et dont les axes sont parallèles, à une largeur de 1448mm (57 pouces).

Des analyses d'aménagement de diverses cabines d'avion révèlent que l'augmentation de largeur des blocs, de 76mm dans l'exemple de réalisation, ne pose le plus souvent pas de problème particulier lorsque la section du fuselage conduit à réduire en conséquence la largeur de la ou des allées de circulation entre les lignes de blocs.

Dans un mode particulier de mise en oeuvre de l'invention, des blocs 2 sont réalisés pour répondre à des longueurs de couchage différentes.

En adaptant des dimensions du repose jambes et ou de panneaux mobiles entre l'assise 31 et la zone pieds 41, et en adaptant le pas **X** des blocs, il est aisé d'augmenter ou de diminuer la longueur des couchages d'un bloc.

Cet avantage permet par exemple de proposer une cabine à confort augmenté ou d'optimiser la configuration d'une cabine en offrant, sans remettre en cause la conception des blocs eux-mêmes, certaines places avec des couchages de longueur supérieure à la moyenne et ou des couchages de longueur inférieure à la moyenne par une modulation du pas **X** d'installation des blocs 2.

Cette solution s'avère particulièrement avantageuse lorsque la longueur d'une cabine, qui peut être imposée par d'autres exigences : issues, aménagements fixes de l'avion ..., ne correspond pas exactement à un nombre entier de blocs agencés avec un pas standard et que certaines places peuvent être « allongées » pour répondre à des besoins exceptionnels pour certains passagers plus grands que la moyenne.

L'invention permet donc de réaliser des sièges de grand confort en configuration de couchage à plat avec un pas entre les sièges sensiblement inférieur à la longueur du couchage et d'aménager des cabines pour passagers, en particulier des cabines d'avion, avec un nombre de sièges supérieur à celui d'un aménagement avec les sièges connus pour une longueur de couchage donnée et une cabine donnée, ou de diminuer la longueur d'une cabine pour un nombre de sièges donné et une longueur de couchage donnée.

## Revendications

1. Ensemble comportant une pluralité de blocs alignés les uns derrière les autres, dans un même sens et sensiblement suivant un même axe, chaque bloc comportant au moins deux sièges (3) mitoyens convertibles individuellement, par un mouvement relatif d'éléments (31, 32, 33) de chacun desdits au moins deux sièges mitoyens, entre une configuration fauteuil, dans laquelle un occupant d'un siège considéré est dans une position assise, et une configuration couchage, dans laquelle des éléments du siège considéré forment un plan de couchage (35) et dans laquelle un occupant du siège considéré est étendu sensiblement à plat et sensiblement horizontalement, les au moins deux sièges (3) mitoyens d'un bloc étant agencés côte à côte et orientés sensiblement dans un même sens, dans lequel ensemble :
• un bloc comporte dans une partie arrière un espace de séparation situé sensiblement entre des dossiers (32) des aux moins deux sièges (3) dudit bloc, lorsque lesdits au moins deux sièges sont en configuration fauteuil, et ouvert vers l'arrière dudit bloc de sorte à déterminer une zone pieds (41) associée à chacun des au moins deux sièges (3) mitoyens du bloc situé derrière le bloc considéré dans la rangée de blocs alignés, ladite zone pieds (41) étant située dans le prolongement du plan de couchage (35) desdits sièges dudit bloc situé derrière le bloc considéré ;
• un axe longitudinal (34) de chacun des au moins deux sièges (3) mitoyens d'un bloc, en configuration couchage, converge vers un point de convergence situé dans un plan vertical de symétrie d'un ensemble formé par lesdits au moins deux sièges mitoyens et en avant des dits sièges ;
et **caractérisé en ce que** :
• les zones pieds (41) associées à chacun des au moins deux sièges (3) mitoyens du bloc situé derrière le bloc comportant l'espace de séparation déterminant lesdites zones pieds sont superposées, au moins en partie, dans une projection verticale ;
• lorsque les au moins deux sièges (3) d'un bloc sont en configuration couchage, le plan de couchage (35) d'un des dits au moins deux sièges est situé à une hauteur différente du plan de couchage de l'autre des dits au moins deux sièges.

2. Ensemble suivant la revendication 1 dans lequel l'espace de séparation dans la partie arrière d'un bloc est occupé par une colonne (4) sensiblement verticale, ladite colonne recouvrant en projection verticale les zones pieds (41) associées à chacun des au moins deux sièges du bloc situé derrière le bloc considéré dans la rangée de blocs alignés, avec une distance de séparation, dit pas **X** des blocs, entre les deux blocs inférieure d'une profondeur **P** de ladite colonne à une longueur désirée **L0** d'un couchage, corrigée des effets d'un angle de convergence de l'axe longitudinal du siège par rapport à un axe de la ligne de bloc.

3. Ensemble suivant la revendication 2 dans lequel le plan de couchage (35) d'un siège d'un bloc (2) dans la configuration couchage est au-dessus en hauteur de la position d'une assise (31) du siège considéré en configuration fauteuil pour au moins un des sièges (3) du bloc considéré.

4. Ensemble suivant la revendication 2 dans lequel le plan de couchage (35) d'un siège d'un bloc (2) dans la configuration couchage est en dessous en hauteur de la position d'une assise (31) du siège considéré en configuration fauteuil pour au moins un des sièges (3, 3') du bloc considéré.

5. Ensemble suivant la revendication 2 dans lequel, lorsque les au moins deux sièges (3) d'un bloc (2) sont en configuration couchage, le plan de couchage (35) de l'un des deux sièges est au-dessus en hauteur de la position des assises (35) des sièges en configuration fauteuil et le plan de couchage (35) de l'autre siège est en dessous de la position des assises (35) des sièges en configuration fauteuil.

6. Ensemble suivant l'une des revendications 2 à 5 dans lequel la colonne (4) d'un bloc (2) comporte deux zones pieds (41) séparées l'une de l'autre et ouvertes en direction de l'arrière du bloc (2) considéré, chaque zone pieds (41) comportant une surface de repos (42) sensiblement dans un plan horizontal, les zones pieds (41) étant décalées en hauteur de telle sorte que les surfaces de repos (42) se trouvent l'une à la hauteur du plan de couchage (35) de l'un des sièges (3) du bloc situé derrière le bloc considéré dans la rangée de blocs alignés et l'autre à la hauteur du plan de couchage (35) différent d'un autre siège dudit bloc situé derrière le bloc considéré.

7. Ensemble suivant la revendication 6 dans lequel le plan de couchage (35) d'un siège d'un bloc (2) en configuration couchage est déterminé par l'assise (31) dudit siège, le dossier (32) dudit siège, un repose jambes (33) dudit siège et ou un ou des panneaux mobiles, prolongé par une surface de repos (42) d'une zone pieds (41) agencé dans l'espace de séparation du bloc situé devant le bloc considéré dans la rangée de blocs alignés, les dits assise, dossier, repose jambes, panneaux mobiles et surface de repos étant alignés sensiblement horizontalement et dans un même plan pour former le couchage.

8. Ensemble suivant l'une des revendications 2 à 5 dans lequel le plan de couchage (35) d'un siège (3, 3') d'un bloc (2) en configuration couchage est déterminé par l'assise (31) dudit siège, le dossier (32) dudit siège et un repose jambes (33) dudit siège, ledit repose jambe formant au moins pour partie une surface de repos (42) d'une zone pieds (41) pénétrant dans un espace creux de la colonne (4, 4') du bloc situé devant le bloc considéré dans la rangée de blocs alignés, lesdits assise, dossier et repose jambes étant alignés sensiblement horizontalement et dans un même plan pour former le couchage.

9. Ensemble suivant la revendication 7 ou la revendication 8 dans lequel les plans de couchage (35) de deux sièges (3, 3') contigus d'un bloc (2), lorsque lesdits deux sièges sont tous les deux dans la configuration couchage, sont décalés en hauteur d'une distance d'environ 330 mm.

10. Ensemble suivant l'une des revendications 2 à 9 dans lequel la colonne (4) d'un bloc (2) intègre des équipements techniques dudit bloc considéré et ou des équipements de confort ou de distraction (43) à l'usage des occupants de sièges du bloc situé derrière le bloc considéré dans la rangée de blocs alignés.

11. Ensemble suivant l'une des revendications 2 à 10 dans lequel une structure fermée (24) entre deux sièges (3, 3') d'un bloc (2) comporte un panneau d'habillage latéral (241) situé sur un côté de ladite structure fermée correspondant à un siège dont l'assise est descendue lors de la conversion vers la position couchage, ledit panneau d'habillage latéral étant démontable lorsque ledit siège dont l'assise est descendue en configuration couchage.

12. Ensemble suivant l'une des revendications 2 à 11 dans lequel un bloc (2) comporte dans sa partie arrière un enfoncement (23) formant espace de stockage, entre le niveau d'un plancher auquel est destiné à être fixé le bloc considéré et la hauteur du couchage le plus bas du bloc situé derrière le bloc considéré dans la rangée de blocs alignés, et traversant ledit bloc considéré dans sa largeur.

13. Ensemble suivant l'une des revendications 2 à 12 dans lequel chacun des blocs (2) alignés est formé de deux sièges (3) dont les axes longitudinaux (34) sont convergents.

14. Ensemble suivant l'une des revendications 2 à 12 dans lequel chacun des blocs (2) alignés est formé de trois sièges (3, 3'), deux sièges (3) contigus des dits trois sièges ayant leurs axes longitudinaux (34) convergents, le troisième siège (3') ayant un axe longitudinal (34') sensiblement parallèle à l'axe longitudinal d'un siège (3) dont il est le plus voisin dans le bloc, ledit siège (3) dont il est le plus voisin étant un siège dont l'assise se déplace vers le haut lors de la conversion en configuration couchage, et un bloc (2) comportant une colonne secondaire (4') agencée dans une partie arrière du bloc considéré entre le troisième siège (3') et le siège (3) dont il est le plus voisin, un espace creux de ladite colonne secondaire formant une zone pieds (41') pour un occupant du troisième siège du bloc situé derrière le bloc considéré dans la rangée de blocs alignés.

15. Cabine (1) ou partie de cabine de véhicule pour le transport de passagers comportant au moins un ensemble conforme à l'une des revendications 1 à 14.

16. Cabine suivant la revendication 15 dans laquelle un siège (3, 3') d'un bloc (2) ayant le plan de couchage situé en hauteur le plus proche du plancher de la cabine (1) est situé d'un côté du bloc (2) bordé par une allée de circulation.

17. Cabine suivant la revendication 16 dans laquelle un pas **X** des blocs (2) d'au moins une ligne de blocs est modulé pour former en configuration couchage des couchages de différentes longueurs **L0** suivant le bloc (2) considéré.

18. Cabine suivant l'une des revendications 15 à 17 dans laquelle le bloc (2) le plus avant dans une ligne de blocs est précédé, vers l'avant dans un sens d'orientation des sièges (3) de ladite ligne, d'une colonne (4^{e}), conforme à une colonne (4) occupant l'espace de séparation dans la partie arrière d'un bloc (2), ladite colonne recouvrant en projection verticale les zones pieds (41) associées aux sièges dudit bloc le plus avant.

19. Véhicule pour le transport de passager comportant une cabine ou une partie d'une cabine conforme à l'une des revendications 15 à 18, ledit véhicules appartenant à l'une des catégories de transport de passagers par terre, par mer ou par air.

## Patentansprüche

1. Baugruppe, aufweisend eine Vielzahl von in einer gleichen Richtung und im Wesentlichen gemäß einer gleichen Achse hintereinander ausgerichteten Blöcken, wobei jeder Block mindestens zwei gemeinschaftliche Sitze (3) aufweist, welche durch eine relative Bewegung von Elementen (31, 32, 33) eines jeden der mindestens zwei gemeinschaftlichen Sitze zwischen einer Sesselkonfiguration, in welcher sich ein Einnehmer eines betreffenden Sitzes in einer Sitzposition befindet, und einer Schlafkonfiguration, in welcher Elemente des betreffenden Sitzes eine Schlafebene (35) bilden und in welcher ein Einnehmer des betreffenden Sitzes im Wesentlichen flach ausgestreckt ist, individuell umwandelbar sind, wobei die mindestens zwei gemeinschaftlichen Sitze (3) eines Blocks nebeneinander und im Wesentlichen in einer gleichen Richtung ausgerichtet sind, in welcher Baugruppe:
• ein Block in einem hinteren Abschnitt einen Trennungsraum aufweist, welcher im Wesentlichen zwischen Rückenlehnen (32) der mindestens zwei Sitze (3) des Blocks angeordnet ist, wenn sich die mindestens zwei Sitze in Sesselkonfiguration befinden, und zum hinteren Ende des Blocks geöffnet ist, so dass ein Fußbereich (41) festgelegt wird, welcher jedem der mindestens zwei gemeinschaftlichen Sitze (3) des hinter dem betreffenden Block in der Reihe von ausgerichteten Blöcken angeordneten Blocks zugeordnet ist, wobei der Fußbereich (41) in der Verlängerung der Schlafebene (35) der Sitze des hinter dem betreffenden Block angeordneten Blocks angeordnet ist;
• eine longitudinale Achse (34) eines jeden der mindestens zwei gemeinschaftlichen Sitze (3) eines Blocks in Schlafkonfiguration auf einen Konvergenzpunkt hin verläuft, welcher in einer senkrechten Symmetrieebene einer von den mindestens zwei gemeinschaftlichen Sitzen gebildeten Baugruppe und vor den Sitzen angeordnet ist;
und **dadurch gekennzeichnet, dass**:
• die Fußbereiche (41), welche jedem der mindestens zwei gemeinschaftlichen Sitze (3) des hinter dem den Trennungsraum, welcher den Fußbereich festlegt, aufweisenden Block angeordneten Blocks zugeordnet sind, zumindest zum Teil in einer senkrechten Projektion überlagert sind;
• wenn sich die mindestens zwei Sitze (3) eines Blocks in Schlafkonfiguration befinden, die Schlafebene (35) eines der mindestens zwei Sitze in einer zur Schlafebene des anderen der mindestens zwei Sitze verschiedenen Höhe befindet.

2. Baugruppe nach Anspruch 1, bei welcher der Trennungsraum im hinteren Abschnitt eines Blocks von einer im Wesentlichen senkrechten Säule (4) eingenommen wird, wobei die Säule in senkrechter Projektion die Fußbereiche (41) überdeckt, welche jedem der mindestens zwei gemeinschaftlichen Sitze des hinter dem betreffenden Block in der Reihe von ausgerichteten Blöcken angeordneten Blocks zugeordnet sind, mit einem Trennungsabstand, so genannte Teilung X der Blöcke, zwischen den beiden Blöcken, welcher um eine Tiefe P der Säule kleiner als eine gewünschte Schlaflänge L0 ist und von Effekten eines Konvergenzwinkels der longitudinalen Achse des Sitzes in Bezug auf eine Achse der Blocklinie korrigiert ist.

3. Baugruppe nach Anspruch 2, bei welcher sich die Schlafebene (35) eines Sitzes eines Blocks (2) in der Schlafkonfiguration in der Höhe oberhalb der Postition einer Sitzfläche (31) des betreffenden Sitzes in Sesselkonfiguration für mindestens einen der Sitze (3) des betreffenden Blocks befindet.

4. Baugruppe nach Anspruch 2, bei welcher sich die Schlafebene (35) eines Sitzes eines Blocks (2) in der Schlafkonfiguration in der Höhe unterhalb der Position einer Sitzfläche (31) des betreffenden Sitzes in Sesselkonfiguration für mindestens einen der Sitze (3, 3') des betreffenden Blocks befindet.

5. Baugruppe nach Anspruch 2, bei welcher, wenn sich die mindestens zwei Sitze (3) eines Blocks (2) in Schlafkonfiguration befinden, die Schlafebene (35) des einen der beiden Sitze sich in der Höhe oberhalb der Position der Sitzflächen (35) der Sitze in Sesselkonfiguration befindet und die Schlafebene (35) des anderen Sitzes sich unterhalb der Position der Sitzflächen (35) der Sitze in Sesselkonfiguration befindet.

6. Baugruppe nach einem der Ansprüche 2 bis 5, bei welcher die Säule (4) eines Blocks (2) zwei Fußbereiche (41) aufweist, welche voneinander getrennt und in Richtung des hinteren Endes des betreffenden Blocks (2) offen sind, wobei jeder Fußbereich (41) eine Ruhefläche (42) in im Wesentlichen einer horizontalen Ebene aufweist, wobei die Fußbereiche (41) in der Höhe derartig versetzt sind, dass sich die eine der Ruheflächen (42) in der Höhe der Schlafebene (35) des einen der Sitze (3) des hinter dem betreffenden Block in der Reihe von ausgerichteten Blöcken angeordneten Blocks und die andere in der Höhe der unterschiedlichen Schlafebene (35) eines anderen Sitzes des hinter dem betreffenden Block angeordneten Blocks befindet.

7. Baugruppe nach Anspruch 6, bei welcher die Schlafebene (35) eines Sitzes eines Blocks (2) in Schlafkonfiguration von der Sitzfläche (31) des Sitzes, der Rückenlehne (32) des Sitzes, einer Beinauflage (33) des Sitzes und oder von einer beweglichen Platte oder von beweglichen Platten festgelegt wird, welche von einer Ruhefläche (42) eines Fußbereichs (41) verlängert wird, welcher in dem Trennungsraum des vor dem betreffenden Block in der Reihe von ausgerichteten Blöcken angeordneten Blocks eingerichtet ist, wobei die Sitzfläche, die Rückenlehne, die Beinauflage, die beweglichen Platten und die Ruhefläche im Wesentlichen horizontal und in einer gleichen Ebene ausgerichtet sind, um die Schlafstätte zu bilden.

8. Baugruppe nach einem der Ansprüche 2 bis 5, bei welcher die Schlafebene (35) eines Sitzes (3, 3') eines Blocks (2) in Schlafkonfiguration von der Sitzfläche (31) des Sitzes, der Rückenlehne (32) des Sitzes und einer Beinauflage (33) des Sitzes festgelegt wird, wobei die Beinauflage zumindest zum Teil eine Ruhefläche (42) eines Fußbereichs (41) bildet, welche in einen hohlen Raum der Säule (4, 4') des vor dem betreffenden Block in der Reihe von ausgerichteten Blöcken angeordneten Blocks eindringt, wobei die Sitzfläche, die Rückenlehne und die Beinauflage im Wesentlichen horizontal und in einer gleichen Ebene ausgerichtet sind, um die Schlafstätte zu bilden.

9. Baugruppe nach Anspruch 7 oder Anspruch 8, bei welcher die Schlafebenen (35) von zwei angrenzenden Sitzen (3, 3') eines Blocks (2), wenn sich die zwei Sitze beide in der Schlafkonfiguration befinden, in der Höhe um einen Abstand von etwa 330 mm versetzt sind.

10. Baugruppe nach einem der Ansprüche 2 bis 9, bei welcher die Säule (4) eines Blocks (2) technische Ausrüstung des betreffenden Blocks und oder Ausrüstung für Komfort oder Zerstreuung (43) zur Benutzung von Sitzeinnehmenden des hinter dem betreffenden Block in der Reihe von ausgerichteten Blöcken angeordneten Blocks integriert.

11. Baugruppe nach einem der Ansprüche 2 bis 10, bei welcher eine geschlossene Struktur (24) zwischen zwei Sitzen (3, 3') eine Blocks (2) eine seitliche Verkleidungsplatte (241) aufweist, welche an einer Seite der geschlossenen Struktur angeordnet ist, welche zu einem Sitz gehört, dessen Sitzfläche während der Umwandlung in die Schlafposition abgesenkt ist, wobei die seitliche Verkleidungsplatte abnehmbar ist, wenn die Sitzfläche des Sitzes in Schlafkonfiguration absenkt ist.

12. Baugruppe nach einem der Ansprüche 2 bis 11, bei welcher ein Block (2) an seinem hinteren Ende eine Einrückung (23) aufweist, welche einen Aufbewahrungsraum zwischen der Ebene eines Bodens, an welchem vorgesehen ist, den betreffenden Block zu befestigen, und der niedrigsten Schlafhöhe des hinter dem betreffenden Block in der Reihe von ausgerichteten Blöcken angeordneten Blocks bildet und den betreffenden Block in seiner Breite durchdringt.

13. Baugruppe nach einem der Ansprüche 2 bis 12, bei welcher jeder der ausgerichteten Blöcke (2) von zwei Sitzen (3) gebildet wird, deren longitudinalen Achsen (34) konvergierend sind.

14. Baugruppe nach einem der Ansprüche 2 bis 12, bei welcher jeder der ausgerichteten Blöcke (2) von drei Sitzen (3, 3') gebildet wird, wobei zwei angrenzende Sitze (3) der drei Sitze konvergierende longitudinale Achsen (34) besitzen und der dritte Sitz (3') eine im Wesentlichen zu der longitudinalen Achse eines Sitzes (3), zu dem er in dem Block am nächsten ist, parallele longitudinale Achse (34') besitzt, wobei der Sitz (3), zu dem er am nächsten ist, ein Sitz ist, dessen Sitzfläche sich bei der Umwandlung in die Schlafkonfiguration nach oben bewegt, und wobei ein Block (2) eine sekundäre Säule (4') aufweist, welche an einem hinteren Ende des betreffenden Blocks zwischen dem dritten Sitz (3') und dem Sitz (3), dem er am nächsten ist, eingerichtet ist, wobei eine hohler Raum der sekundären Säule einen Fußbereich (41') für einen Einnehmer des dritten Sitzes des hinter dem betreffenden Block in der Reihe von ausgerichteten Blöcken angeordneten Blocks bildet.

15. Kabine (1) oder Kabinenabschnitt eines Fahrzeugs für den Transport von Passagieren, aufweisend mindestens eine Baugruppe gemäß einem der Ansprüche 1 bis 14.

16. Kabine nach Anspruch 15, bei welcher ein Sitz (3, 3') eines Blocks (2), welcher die Schlafebene besitzt, welche in der Höhe am dichtesten am Boden der Kabine (1) angeordnet ist, an einer Seite des Blocks (2) angeordnet ist, welche von einem Laufgang gesäumt wird.

17. Kabine nach Anspruch 16, bei welcher eine Teilung X der Blöcke (2) von mindestens einer Linie von Blöcken angepasst ist, um in Schlafkonfiguration der Schlafstätten von unterschiedlichen Längen L0 entsprechend des betreffenden Blocks (2) zu bilden.

18. Kabine nach einem der Ansprüche 15 bis 17, bei welcher dem in einer Linie von Blöcken vordersten Block (2) in einer Richtung der Orientierung der Sitze (3) der Linie eine Säule (4^{e}) vorgeschaltet ist, welche einer Säule (4) entspricht, welche den Trennungsraum am hinteren Ende eines Blocks (2) einnimmt, wobei die Säule in senkrechter Projektion die Fußbereiche (41), welche den Sitzen des vordersten Blocks zugeordnet sind, überdeckt.

19. Fahrzeug für den Transport von Passagieren, aufweisend eine Kabine oder einen Teil einer Kabine gemäß einem der Ansprüche 15 bis 18, wobei das Fahrzeug einer der Kategorien zum Transport von Passagieren zu Erde, zu Wasser oder zu Luft angehört.

## Claims

1. Assembly comprising a plurality of blocks aligned behind one another, in one and the same direction and substantially along one and the same axis, each block comprising at least two adjoining seats (3) which can be individually converted, by a relative movement of elements (31, 32, 33) of each of the said at least two adjoining seats, between a chair configuration in which an occupant of a seat in question is in a seated position, and a bed configuration in which elements of the seat in question form a bed plane (35) and in which an occupant of the seat in question is stretched out substantially flat and substantially horizontally, the at least two adjoining seats (3) of a block being arranged side by side and oriented substantially in one and the same direction, in which assembly:
• a block comprises in a rear part a separation space situated substantially between seat backs (32) of the at least two seats (3) of the said block when the said at least two seats are in the chair configuration, and open towards the rear of the said block so as to determine a foot area (41) associated with each of the at least two adjoining seats (3) of the block situated behind the block in question in the row of aligned blocks, the said foot region (41) being situated in the extension of the bed plane (35) of the said seats of the said block situated behind the block in question;
• a longitudinal axis (34) of each of the at least two adjoining seats (3) of a block, in the bed configuration, converges towards a convergence point situated in a vertical plane of symmetry of an assembly formed by the said at least two adjoining seats and in front of the said seats;
and **characterized in that**:
• the foot regions (41) associated with each of the at least two adjoining seats (3) of the block situated behind the block comprising the separation space determining the said foot regions are superposed, at least in part, in a vertical projection;
• when the at least two seats (3) of a block are in the bed configuration, the bed plane (35) of one of the said at least two seats is situated at a height which is different from the bed plane of the other of the said at least two seats.

2. Assembly according to Claim 1 in which the separation space in the rear part of a block is occupied by a substantially vertical column (4), the said column covering in vertical projection the foot regions (41) associated with each of the at least two seats of the block situated behind the block in question in the row of aligned blocks, with a separation distance, termed pitch **X** of the blocks, between the two blocks which is less by a depth **P** of the said column than a desired length **L0** of a bed, corrected of the effects of an angle of convergence of the longitudinal axis of the seat with respect to an axis of the block line.

3. Assembly according to Claim 2 in which the bed plane (35) of a seat of a block (2) in the bed configuration is vertically above the position of a seat cushion (31) of the seat in question in the chair configuration for at least one of the seats (3) of the block in question.

4. Assembly according to Claim 2 in which the bed plane (35) of a seat of a block (2) in the bed configuration is vertically below the position of a seat cushion (31) of the seat in question in the chair configuration for at least one of the seats (3, 3') of the block in question.

5. Assembly according to Claim 2 in which, when the at least two seats (3) of a block (2) are in the bed configuration, the bed plane (35) of one of the two seats is vertically above the position of the seat cushions (35) of the seats in the chair configuration and the bed plane (35) of the other seat is below the position of the seat cushions (35) of the seats in the chair configuration.

6. Assembly according to one of Claims 2 to 5 in which the column (4) of a block (2) comprises two foot regions (41) separated from one another and open in the direction of the rear of the block (2) in question, each foot region (41) comprising a rest surface (42) substantially in a horizontal plane, the foot regions (41) being offset in height such that the rest surfaces (42) are situated with one at the height of the bed plane (35) of one of the seats (3) of the block situated behind the block in question in the row of aligned blocks and with the other at the height of the different bed plane (35) of another seat of the said block situated behind the block in question.

7. Assembly according to Claim 6 in which the bed plane (35) of a seat of a block (2) in the bed configuration is determined by the seat cushion (31) of the said seat, the seat back (32) of the said seat, a leg rest (33) of the said seat and/or one or more movable panels, extended by a rest surface (42) of a foot region (41) arranged in the separation space of the block situated in front of the block in question in the row of aligned blocks, the said seat cushion, seat back, leg rest, movable panels and rest surface being aligned substantially horizontally and in one and the same plane to form the bed.

8. Assembly according to one of Claims 2 to 5 in which the bed plane (35) of a seat (3, 3') of a block (2) in the bed configuration is determined by the seat cushion (31) of the said seat, the seat back (32) of the said seat and a leg rest (33) of the said seat, the said leg rest forming at least in part a rest surface (42) of a foot region (41) penetrating into a hollow space of the column (4, 4') of the block situated in front of the block in question in the row of aligned blocks, the said seat cushion, seat back and leg rest being aligned substantially horizontally and in one and the same plane to form the bed.

9. Assembly according to Claim 7 or Claim 8 in which the bed planes (35) of two contiguous seats (3, 3') of a block (2), when the said two seats are both in the bed configuration, are offset in height by a distance of about 330 mm.

10. Assembly according to one of Claims 2 to 9 in which the column (4) of a block (2) incorporates technical equipment of the said block in question and/or comfort or entertainment equipment (43) for use by the occupants of seats of the block situated behind the block in question in the row of aligned blocks.

11. Assembly according to one of Claims 2 to 10 in which a closed structure (24) between two seats (3, 3') of a block (2) comprises a side trim panel (241) situated on a side of the said closed structure corresponding to a seat of which the seat cushion is lowered during conversion to the bed position, the said side trim panel being removable when the said seat of which the seat cushion is lowered is in the bed configuration.

12. Assembly according to one of Claims 2 to 11 in which a block (2) comprises in its rear part a recess (23) forming a storage space, between the level of a floor to which the block in question is intended to be fixed and the lowest bed height of the block situated behind the block in question in the row of aligned blocks, and passing through the said block in question in its width.

13. Assembly according to one of Claims 2 to 12 in which each of the aligned blocks (2) is formed by two seats (3) of which the longitudinal axes (34) are convergent.

14. Assembly according to one of Claims 2 to 12 in which each of the aligned blocks (2) is formed by three seats (3, 3'), two contiguous seats (2) of the said three seats having their longitudinal axes (34) convergent, the third seat (3`) having a longitudinal axis (34') substantially parallel to the longitudinal axis of a seat (3) closest to it in the block, the said seat (3) closest to it being a seat of which the seat cushion is moved upwards during conversion into the bed configuration, and a block (2) comprising a secondary column (4') arranged in a rear part of the block in question between the third seat (3') and the seat (3) closest to it, a hollow space of the said secondary column forming a foot region (41') for an occupant of the third seat of the block situated behind the block in question in the row of aligned blocks.

15. Cabin (1) or part of a cabin of a vehicle for transporting passengers comprising at least one assembly according to one of Claims 1 to 14.

16. Cabin according to Claim 15 in which a seat (3, 5') of a block (2) having the bed plane situated vertically closest to the floor of the cabin (1) is situated on a side of the block (2) which is bordered by an aisle.

17. Cabin according to Claim 16 in which a pitch **X** of the blocks (2) of at least one line of blocks is modified to form, in the bed configuration, beds of different length **L0** depending on the block (2) in question.

18. Cabin according to one of Claims 15 to 17 in which the foremost block (2) in a line of blocks is preceded, towards the front in a direction of orientation of the seats (3) of the said line, by a column (4^{e}) in accordance with a column (4) occupying the separation space in the rear part of a block (2), the said column covering in vertical projection the foot regions (41) associated with the said seats of the said foremost block.

19. Vehicle for transporting passengers comprising a cabin or part of a cabin according to one of Claims 15 to 18, the said vehicle belonging to one of the categories of transporting passengers by land, by sea or by air.
